# EUROPEAN PATENT APPLICATION

(11) **EP 2 373 082 A1**
(43) Date of publication of application: **05.10.2011**
(21) Application number: 11158761.4
(22) Date of filing: 18.03.2011
(51) Int. Cl.: H04W 28/06, H04W 72/12, H04L 1/18

(54) **A method and apparatus for packet aggregation transmission**

(30) Priority: 31.03.2010 CN 201010137696
(71) Applicant: Siemens Aktiengesellschaft, 80333 Munich (DE)
(72) Inventor: Keller, Stefan, 76133 Karlsruhe (DE); Lampe, Mattias, Dr., 38304 Wolfenbuettel (DE); Li, Zhi Jun, 100011 Beijing (CN); Tian, Ji Feng, 100102 Beijing (CN)

(57) **Abstract**

The present invention provides a method and apparatus for packet aggregation transmission, which are for application in a system comprising a transmitting end and at least two receiving ends, wherein the method comprises: for each receiving end, determining respectively a hold-up condition of subpackets at the transmitting end and the receiving end at the current transmitting time; and determining the receiving end corresponding to the worst hold-up condition of the subpackets at the transmitting end and the receiving end, and performing a packet aggregation transmission to the determined receiving end at the current transmitting time. The present invention is directed to the scenario of the point-to-multipoint data transmission, can solve the problem of transmission time sequence for a plurality of receiving ends, and improves the system's instantaneity to the maximum degree.

## Description

### Technical field

The present invention relates to the technical field of mobile communication and, particularly, to a method and apparatus for packet aggregation transmission.

### Background art

802.11n as a new wireless local area network (WLAN) standard has been developed rapidly, and since it utilizes new technologies in the MAC layer and physical layer, it has a throughput far higher than that of the existing WLAN standards such as 802.11a, 802.11b and 802.11g, etc., which can be up to 600 Mbps. In this case, one new technology is the packet aggregation technology, which is particularly as follows: each data packet (referred to as a subpacket in the following description) received from an MAC service access point (SAP) is aggregated as a big aggregated packet which is then transmitted on the physical layer, and only one block response (Block ACK) needs to be fed back for all the subpackets in this aggregated packet rather than feeding back respectively an ACK for each subpacket.

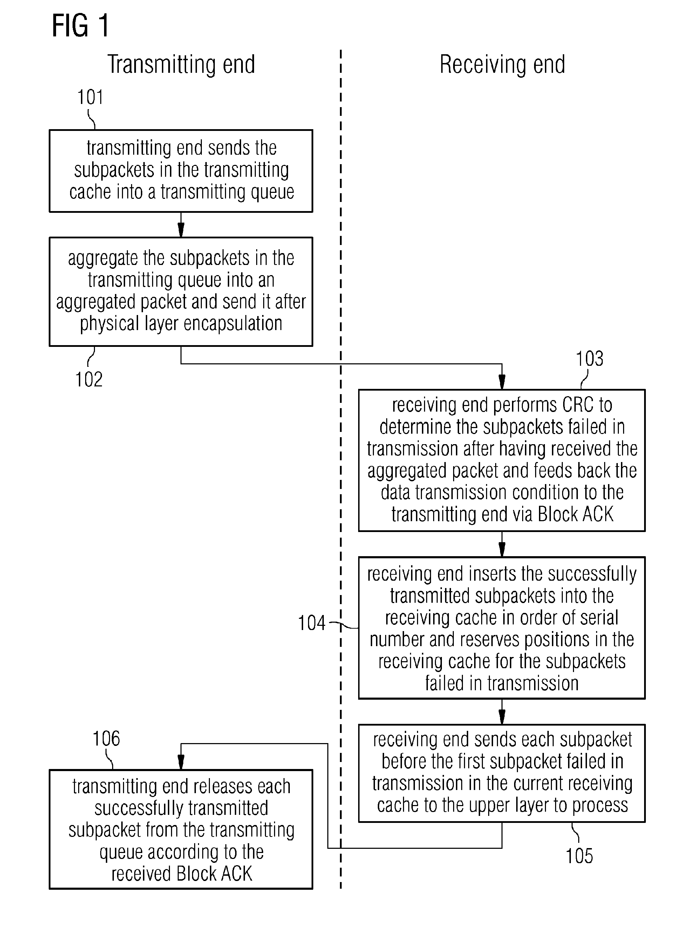

The transmission process of the data packets in the packet aggregation technology is shown in Fig. 1, which mainly comprises the following steps:
Step 101: a transmitting end sends the subpackets in a transmitting cache into a transmitting queue, in which case the transmitting queue may comprise the subpackets which need to be retransmitted due to the transmission failure in a previous transmission of an aggregated packet.

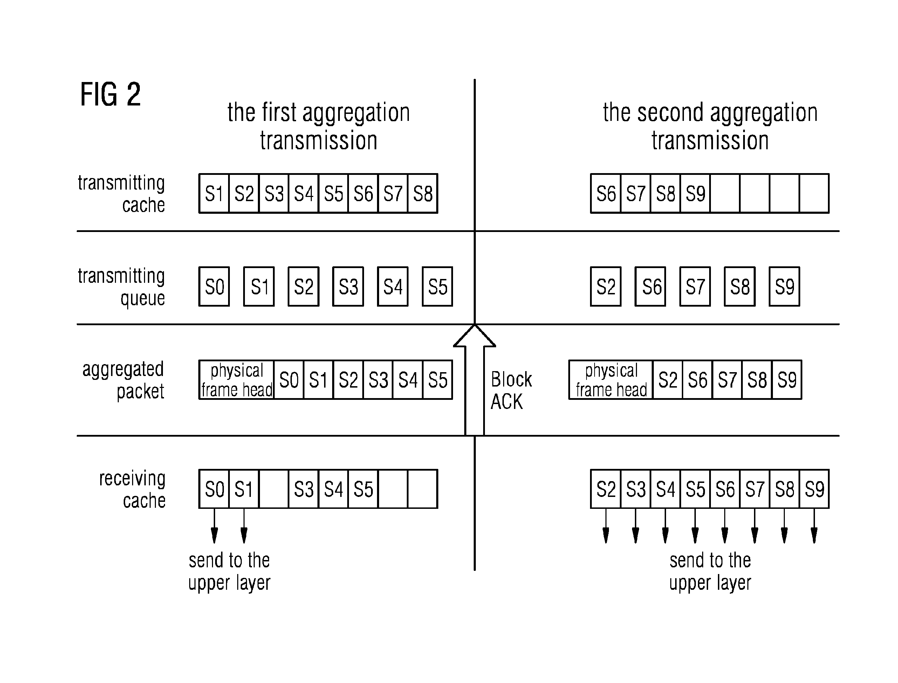

Usually at the transmitting end, each subpacket received from the MAC SAP is first sent into the transmitting cache. Here, using the data transmission example shown in Fig. 2 as an example, first, subpackets S1, S2, S3, S4 and S5 in the transmitting cache are sent into the transmitting queue, assuming there is a subpacket S0 which needs to be retransmitted in the queue at this moment.

Step 102: the subpackets in the transmitting queue are aggregated as an aggregated packet, and the packet is sent out after having been encapsulated in the physical layer.

Due to the use of the aggregation technology, when performing a physical layer encapsulation, it only needs to encapsulate all the subpackets in the transmitting queue into one physical frame. S0, S1 S2, S3, S4 and S5 are aggregated into an aggregated packet in Fig. 2.

Step 103: after having received the aggregated packet, a receiving end performs a cyclic redundancy check (CRC) to determine the subpackets failed during transmission and feeds back the data transmission condition to the transmitting end by Block ACK.

Step 104: the receiving end inserts the successfully transmitted subpackets into a receiving cache according to the serial numbers and reserves positions in the receiving cache for the subpackets failed during transmission according to the serial numbers.

Assuming the subpacket S2 is failed during transmission, the receiving end would insert the subpackets S0 S1 S3, S4 and S5 successfully transmitted into the receiving cache and reserves a corresponding position for S2.

Step 105: the receiving end sends each subpacket before the first subpacket failed during transmission in the current receiving cache to the upper layer for processing.

As shown in Fig. 2, the receiving end sends S0 and S1 to the tenth layer for processing.

Step 106: the transmitting end releases each successfully transmitted subpacket from the transmitting queue according to the received Block ACK; and goes to step 101 during the next aggregation transmission.

The transmitting end releases the successfully transmitted S0, S1 S3, S4 and S5 from the transmitting queue, and then only S2 (i.e., the subpacket which needs to be retransmitted during the next aggregation transmission) remains in the transmitting queue.

During the next aggregation transmission, as shown in Fig. 2, the transmitting end sends S6, S7, S8 and S9 in the transmitting cache into the transmitting queue; and then aggregates S2, S6, S7, S8 and S9 in the transmitting queue as an aggregated packet and sends it out. After having received the aggregated packet, assuming all the subpackets are transmitted successfully, the receiving end sends the received subpackets into the receiving cache according to the serial numbers; and since there is no subpacket failed during transmission, all the subpackets in the receiving cache can be sent to the upper layer.

It can be seen that in the packet aggregation transmission technology, the throughput and the instantaneity of a system are restrictive to each other, and although the number of the aggregated subpackets increases the system's throughput, it increases the length of the aggregated packet, thus increasing the transmission time and the retransmission time for the data packets. The bigger the number of the subpackets, the bigger the system throughput, but the poorer the instantaneity.

Even if there is a mechanism for changing flexibly the aggregated number of the subpackets in the existing packet aggregation transmission method, i.e., the biggest aggregated number is defined, and if the number of the subpackets in the transmitting queue is smaller than the defined biggest aggregated number, then all the subpackets in the transmitting queue are aggregated as one aggregated packet; otherwise, only the subpackets of the biggest aggregated number are aggregated as one aggregated packet, thus the system throughput and the data transmission instantaneity can be balanced as much as possible.

However, the existing packet aggregation transmission method is directed to point-to-point transmission, and for a point-to-multipoint transmission scenario, it relates to the transmission time sequence problem for a plurality of receiving ends, i.e., to which receiving end the packet aggregation transmission is to be performed at the current moment so that it can improve the system instantaneity as much as possible, but there is not yet in the prior art a packet aggregation transmission method for the point-to-multipoint transmission.

Furthermore, since certain subpackets are failed during transmission, the receiving end has a strict requirement to the order of the subpackets, and only after the subpacket failed during transmission has been successfully retransmitted, each subpacket after it in the receiving cache can be sent to the upper layer, this phenomena being referred to herein as a hold-up effect, and it seriously affects the instantaneity of the data transmission. Therefore, the existing packet aggregation transmission method cannot improve significantly the instantaneity of the data transmission on the basis of ensuring the system throughput.

### Contents of the invention

In view of this situation, the object of the present invention is to provide a method and apparatus for packet aggregation transmission so as to improve the instantaneity of the data transmission to the maximum extent in a point-to-multipoint transmission scenario.

The present invention further provides a method and apparatus for packet aggregation transmission so as to reduce the hold-up effect of the receiving end and improve the instantaneity of the data transmission.

A method for packet aggregation transmission is for application in a system comprising a transmitting end and at least two receiving ends, the method comprising:
A. determining, for each receiving end, respectively the hold-up condition of the subpackets at the transmitting end and the receiving end at the current transmitting time; and
B. determining the receiving end corresponding to the worst hold-up condition of the subpackets at the transmitting end and the receiving end, and performing a packet aggregation transmission to the determined receiving end at the current transmitting time.

In this case, said hold-up condition of the subpackets at the transmitting end and the receiving end is the sum *Nᵢ* of the number of the subpackets held up at said transmitting end and said receiving end, where *i* is an identifier of the receiving end; and
said receiving end corresponding to the worst hold-up condition of the subpackets at the transmitting end and the receiving end is the receiving end corresponding to the maximum value of *Nᵢ.*

When said system uses a mechanism of distributed coordination function DCF, said *Nᵢ* is *Nᵢ*=*Sᵢ^{D1}Sᵢ^{D2}*, where *Sᵢ^{D1}* is the biggest serial number of the subpacket in the transmitting cache at the transmitting end corresponding to the receiving end with the identifier *i* at the current transmitting time, and *Sᵢ^{D2}* is the smallest serial number of the subpacket in the transmitting queue at the transmitting end corresponding to the receiving end with the identifier *i* at the current transmitting time; and
when said system uses a mechanism of point coordination function PCF, said *Nᵢ* is *Nᵢ=aᵢ (Sᵢ^{D1}-Sᵢ^{D2}) +bᵢ (Sᵢ^{U1}+Sᵢ^{U2}),* wherein *Sᵢ^{U1}* is the biggest serial number of the subpacket in the receiving cache at the transmitting end corresponding to the receiving end with the identifier *i* at the current transmitting time, *Sᵢ^{U2}* is the smallest serial number of the subpacket in the receiving cache at the transmitting end corresponding to the receiving end with the identifier *i* at the current transmitting time, *aᵢ* is the weight value of the transmission urgency of the downstream data corresponding to the receiving end with the identifier *i*, and *bᵢ* is the weight value of the transmission urgency of the upstream data corresponding to the receiving end with the identifier i.

Said hold-up condition of the subpackets at the transmitting end and the receiving end is the hold-up time period *Tᵢ* of the subpackets at said transmitting end and said receiving end, wherein *i* is an identifier of the receiving end; and
said receiving end corresponding to the worst hold-up condition of the subpackets at the transmitting end and the receiving end is the receiving end corresponding to the maximum value of *Tᵢ.*

When said system uses a mechanism of distributed coordination function DCF, said *Tᵢ* is *Tᵢ=Tᵢ^{D1}-Tᵢ^{D2},* wherein *Tᵢ^{D1}* is the biggest time stamp value of the subpacket in the transmitting cache at the transmitting end corresponding to the receiving end with the identifier *i* at the current transmitting time, and *Tᵢ ^{D2}* is the smallest time stamp value of the subpacket in the transmitting queue at the transmitting end corresponding to the receiving end with the identifier *i* at the current transmitting time; and
when said system uses a mechanism of point coordination function PCF, said *Tᵢ* is *Tᵢ=aᵢ(Tᵢ^{D1}-Tᵢ^{D2})+bᵢ(Tᵢ^{U1}+Tᵢ^{U2}),* wherein *Tᵢ^{U1}* is the biggest time stamp value of the subpacket in the receiving cache at the transmitting end corresponding to the receiving end with the identifier *i* at the current transmitting time, *Tᵢ^{U2}* is the smallest time stamp value of the subpacket in the receiving cache at the transmitting end corresponding to the receiving end with the identifier *i* at the current transmitting time, aᵢ is the weight value of the transmission urgency of the downstream data corresponding to the receiving end with the identifier *i*, and *bᵢ* is the weight value of the transmission urgency of the upstream data corresponding to the receiving end with the identifier *i*.

After said step B, the method further comprises: deleting by said transmitting end the successfully transmitted subpackets from the transmitting queue at the transmitting end corresponding to said determined receiving end according to a returned response from the receiving end regarding said packet aggregation transmission, and going to step A at the next transmitting time.

An apparatus for packet aggregation transmission is for application in a system comprising a transmitting end and at least two receiving ends, the apparatus being set at the transmitting end, and the apparatus comprising a hold-up condition determination unit, a receiving end determination unit and an aggregation transmission unit;
in which said hold-up condition determination unit is used for determining the hold-up condition of the subpackets at the transmitting end and the receiving end respectively for each receiving end at the current transmitting time;
said receiving end determination unit is used for determining the receiving end corresponding to the worst hold-up condition of the subpackets at the transmitting end and the receiving end; and
said aggregation transmission unit is used for performing a packet aggregation transmission to the receiving end determined by said receiving end determination unit at the current transmitting time.
Said hold-up condition of the subpackets at the transmitting end and the receiving end is the sum *Nᵢ* of the number of the subpackets held up at said transmitting end and said receiving end, wherein *i* is an identifier of the receiving end; and
said receiving end corresponding to the worst hold-up condition of the subpackets at the transmitting end and the receiving end is the receiving end corresponding to the maximum value of *N*ᵢ*.*

When said system uses the DCF mechanism, said hold-up condition determination unit comprises:
a first serial number determination sub-unit for determining *Sᵢ^{D1}* and *Sᵢ^{D2}* respectively for each receiving end, wherein *Sᵢ^{D1}* is the biggest serial number of the subpacket in the transmitting cache at the transmitting end corresponding to the receiving end with the identifier *i* at the current transmitting time, and *Sᵢ^{D2}* is the smallest serial number of the subpacket in the transmitting queue at the transmitting end corresponding to the receiving end with the identifier *i* at the current transmitting time; and
a first hold-up number determination sub-unit for determining said number Nᵢ of the subpackets held up at the transmitting end and the receiving end according to *Nᵢ=Sᵢ^{D1}-Sᵢ^{D2};* and
when said system uses the PCF mechanism, said hold-up condition determination unit comprises:
   a second serial number determination sub-unit for determining *Sᵢ^{D1}, Sᵢ^{D2}, Sᵢ^{U1}* and *Sᵢ^{U2}* respectively for each receiving end, wherein *Sᵢ^{U1}* is the biggest serial number of the subpacket in the receiving cache at the transmitting end corresponding to the receiving end with the identifier *i* at the current transmitting time, and *Sᵢ^{U2}* is the smallest serial number of the subpacket in the receiving cache at the transmitting end corresponding to the receiving end with the identifier *i* at the current transmitting time; and
   a second hold-up number determination sub-unit for determining said number *Nᵢ* of the subpackets held up at the transmitting end and the receiving end according to *Nᵢ=aᵢ(Sᵢ^{D1}*-*Sᵢ^{D2})+bᵢ(Sᵢ^{U1}-Sᵢ^{U2}),* wherein *aᵢ* is the weight value of the transmission urgency of the downstream data corresponding to the receiving end with the identifier *i*, and *bᵢ* is the weight value of the transmission urgency of the upstream data corresponding to the receiving end with the identifier *i*.

Said hold-up condition of the subpackets at the transmitting end and the receiving end is the hold-up time period *Tᵢ* of the subpackets at said transmitting end and said receiving end, wherein *i* is an identifier of the receiving end; and
said receiving end corresponding to the worst hold-up condition of the subpackets at the transmitting end and the receiving end is the receiving end corresponding to the maximum value of *Tᵢ.*

When said system uses the DCF mechanism, said hold-up condition determination unit comprises:
a first time stamp determination sub-unit for determining *Tᵢ^{D1}* and *Tᵢ^{D2}* respectively for each receiving end, wherein *Tᵢ^{D1}* is the biggest time stamp value of the subpacket in the transmitting cache at the transmitting end corresponding to the receiving end with the identifier *i* at the current transmitting time, and T*ᵢ*^{D2} is the smallest time stamp value of the subpacket in the transmitting queue at the transmitting end corresponding to the receiving end with the identifier *i* at the current transmitting time; and
a first hold-up time period determination sub-unit for determining said sum Tᵢ of the hold-up time period of the subpackets at the transmitting end and the receiving end according to *Tᵢ=_{Ti}^{D1}-_{Ti}^{D2};* and
when said system uses the PCF mechanism, said hold-up condition determination unit comprises:
   a second time stamp determination sub-unit for determining *Tᵢ^{D1}, Tᵢ^{D2}, Tᵢ^{U1}* and *Tᵢ^{U2}* respectively for each receiving end, wherein *Tᵢ^{U1}* is the biggest time stamp value of the subpacket in the receiving cache at the transmitting end corresponding to the receiving end with the identifier i at the current transmitting time, and *Tᵢ^{U2}* is the smallest time stamp value of the subpacket in the receiving cache at the transmitting end corresponding to the receiving end with the identifier *i* at the current transmitting time; and
   a second hold-up time period determination sub-unit for determining said sum *Tᵢ* of the hold-up time period of the subpackets at the transmitting end and the receiving end according to *Tᵢ=aᵢ(Tᵢ^{D1}-Tᵢ^{D2})+bᵢ(Ti^{U1}-Tᵢ^{U2}),* wherein *aᵢ* is the weight value of the transmission urgency of the downstream data corresponding to the receiving end with the identifier *i*, and *bᵢ* is the weight value of the transmission urgency of the upstream data corresponding to the receiving end with the identifier i.

More preferably, the apparatus further comprises: a transmission response processing unit for deleting the successfully transmitted subpackets from the transmitting queue at the transmitting end corresponding to said determined receiving end according to a returned response from the receiving end regarding said packet aggregation transmission.

The present invention further provides another method for packet aggregation transmission, the method comprising:
after having deleted the successfully transmitted subpackets from a transmitting queue according to a returned response from a receiving end regarding a packet aggregation transmission, duplicating by a transmitting end *N* copies of the subpackets to be retransmitted in the transmitting queue, and performing a packet aggregation transmission to the *N* subpackets together with the subpackets sent into the transmitting queue from a transmitting cache; wherein *N* is an integer greater than 1.

In this case, said *N* is a preset value;
or, said *N* is a value related to the retransmission times for said subpackets to be retransmitted;
or, said *N* is a value related to the instantaneity requirement at said receiving end.

In particular, during the packet aggregation transmission, said *N* subpackets are placed at a position set in the aggregated packet or placed at a position calculated randomly or pseudo-randomly in the aggregated packet.

The present invention further provides another apparatus for packet aggregation transmission, the apparatus being set at a transmitting end, and the apparatus comprising: a response processing unit, a packet duplication unit and an aggregation transmission unit;
in which, said response processing unit is used for deleting the successfully transmitted subpackets from a transmitting queue according to a returned response from a receiving end regarding a packet aggregation transmission and sending a process notification to said packet duplication unit;
said packet duplication unit is used for duplicating *N* copies of the subpackets to be retransmitted in the transmitting queue after having received said process notification; and
said aggregation transmission unit is used for performing a packet aggregation transmission to the duplicated *N* subpackets together with the subpackets sent into the transmitting queue from a transmitting cache;
wherein, *N* is an integer greater than 1.

In this case, said *N* is a preset value; or
said *N* is a value related to the retransmission times for said subpackets to be retransmitted; or
said *N* is a value related to the instantaneity requirement at said receiving end.

During the process of performing said packet aggregation transmission, said aggregation transmission unit places said *N* subpackets at a position set in the aggregated packet or at a position calculated randomly or pseudo-randomly in the aggregated packet.

It can be seen from the above technical solutions that the present invention provides a particular method for packet aggregation transmission for the point-to-multipoint transmission scenario, determines for each receiving end a hold-up condition of the subpackets at the transmitting end and receiving end, determines the receiving end corresponding to the worst hold-up condition of the subpackets at the transmitting end and the receiving end, and performs at the current transmitting time a preferential packet aggregation transmission to this receiving end. By solving the problem of transmission time sequence for a plurality of receiving ends in this way, it improves the system instantaneity to the maximum degree.

The present invention also improves the probability for the receiving end to successfully receive the retransmitted subpackets by duplicating *N* copies of the retransmitted subpackets together with performing the packet aggregation transmission to the subpackets sent into the transmitting queue from the transmitting cache, enabling the subpackets held up in the receiving cache to be sent to the upper layer as quickly as possible, thus improving the system instantaneity.

### Brief description of the accompanying drawings

Fig. 1 is a schematic diagram of the flow in an existing packet aggregation transmission technology.
Fig. 2 is an exemplary illustration of an existing packet aggregation transmission technology.
Fig. 3 is a flowchart of a main method provided by the present invention.
Fig. 4 is a flowchart of a method provided by embodiment I of the present invention.
Fig. 5 is a flowchart of a method provided by embodiment II of the present invention.
Fig. 6 is a particular example illustration of embodiment II of the present invention.
Fig. 7 is a schematic diagram of the structure of an apparatus provided by the present invention.
Fig. 8 is another schematic diagram of the structure of an apparatus provided by the present invention.
Fig. 9 is a particular example illustration of embodiment III of the present invention.
Fig. 10 is a schematic diagram of the structure of another apparatus provided by the present invention.

### Exemplary embodiments

In order to make the objects, technical solutions and advantages of the present invention more apparent, the present invention will be described hereinbelow in detail in conjunction with the accompanying drawings and particular embodiments.

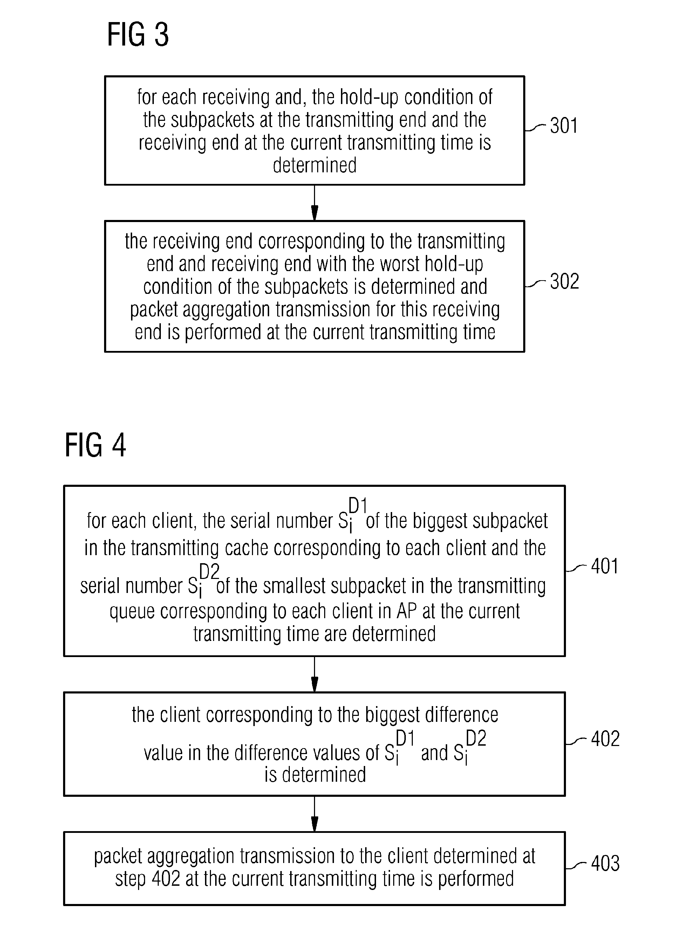

In the scenario of a point-to-multipoint transmission, the requirement of instantaneity is aimed at the whole transmission system, which mainly depends on service quality requirements and transmission urgency; instead, the present invention does not take the service quality requirements into consideration, assuming the service quality requirements of each receiving end are the same, and the transmission time sequence of the receiving end is determined mainly on the basis of the transmission urgency at each receiving end. A method provided by the present invention as shown in Fig. 3 mainly comprises:
Step 301: a hold-up condition of the subpackets at the transmitting end and the receiving end at the current transmitting time is determined for each receiving end.

In this step, the hold-up condition of the subpackets at the transmitting end and the receiving end can be the sum Nᵢ of the number of subpackets held up at the transmitting end and the receiving end; and it also can be the sum *Tᵢ* of the hold-up time period of the subpackets at the transmitting end and the receiving end, wherein *i* is an identifier of each receiving end.

Step 302: the receiving end corresponding to the worst hold-up condition of the subpackets at the transmitting end and the receiving end is determined, and a packet aggregation transmission is performed to the determined receiving end at the current transmitting time.

When the hold-up condition is the sum *Nᵢ* of the number of the hold-up subpackets, the receiving end corresponding to the biggest value of *Nᵢ* is determined; and when the hold-up condition is the hold-up time period *Tᵢ* of the subpackets, then the receiving end corresponding to the biggest value of *Tᵢ* is determined.

In the existing wireless communication, there are mainly two time sequence allocation mechanisms, i.e. the distributed coordination function (DCF) and the point coordination function (PCF). Here, DCF is a mechanism that is most widely applied in the existing IEEE 802.11 WLAN system, and in DCF, each client performs channel access by means of competition. In PCF, the access points (AP) allow each client to perform channel access by means of a poll so as to implement the transmission of upstream and downstream data. Hereinbelow, two embodiments will be provided respectively for DCF and PCF to describe in detail the method provided by the present invention.

### Embodiment I:

In the DCF mechanism, each client performs channel access by means of competition, and only the transmission time sequence of downstream data is collectively controlled by an AP, therefore, the manner provided by the present invention is used for the downstream data transmission to clients at the AP side, assuming there are N clients at this AP in the system, then there is a transmitting cache and transmitting queue respectively for the downstream transmission of these N clients at the AP side. Fig. 4 is a schematic diagram of the method provided by embodiment I, as shown in Fig. 4, the method particularly comprising the following steps:
Step 401: the biggest serial number *Sᵢ^{D1}* of the subpacket in the transmitting cache corresponding to each client in the AP and the smallest serial number *Sᵢ^{D2}* of the subpacket in the transmitting queue corresponding to each client at the current transmitting time are determined for each client, wherein *i* is an identifier of each client, *i*=*1*, 2, ..., *N*.

If the current transmitting time is the first transmitting time, then possibly there is no subpacket in the transmitting queue corresponding to the client, then the smallest serial number *Sᵢ^{D2}* of the subpacket in the transmitting queue is *0*.

If the current transmitting time is not the first transmitting time, then before this step, after the AP has received a Block ACK, the successfully transmitted subpackets in a previous packet aggregation transmission are first deleted from the transmitting queue corresponding to the client in the AP.

Step 402: the client corresponding to the biggest difference value in the difference values between *Sᵢ^{D1}* and *Sᵢ^{D2}* is determined.

Step 403: a packet aggregation transmission is performed to the client determined at step 402 at the current transmitting time.

Since there is a part of subpackets held up and to be retransmitted in the transmitting cache, at the same time there is a part of subpackets held up in the receiving queue of the receiving end, and the subpackets held up in the receiving queue of the receiving end are the subpackets after the subpackets to be retransmitted with the smallest serial number, the smallest serial number in the transmitting queue being the smallest serial number in the subpackets to be retransmitted, therefore the difference value between the biggest serial number *Sᵢ^{D1}* of the subpackets in the transmitting cache and the smallest serial number *Sᵢ^{D2}* of the subpackets in the transmitting queue just reflects the sum Nᵢ of the number of hold-up subpackets at the transmitting end and the receiving end.

The bigger the sum of the number of the hold-up subpackets at the transmitting end and the receiving end, the higher the transmission urgency of the receiving end (i.e. the client in this embodiment) it indicates, and in order to meet the instantaneity requirements of this client, the packet aggregation transmission of this client is preferably performed at the current time. That is, the AP sends the subpackets in the transmitting cache corresponding to this client into the transmitting queue, then aggregates the subpackets not exceeding the biggest aggregation number in the transmitting queue, and then sends it to this client.

After having received the Block ACK returned from this client, the successfully transmitted subpackets are deleted from the transmitting queue corresponding to this client in AP, and then it goes to step 401.

### Embodiment II:

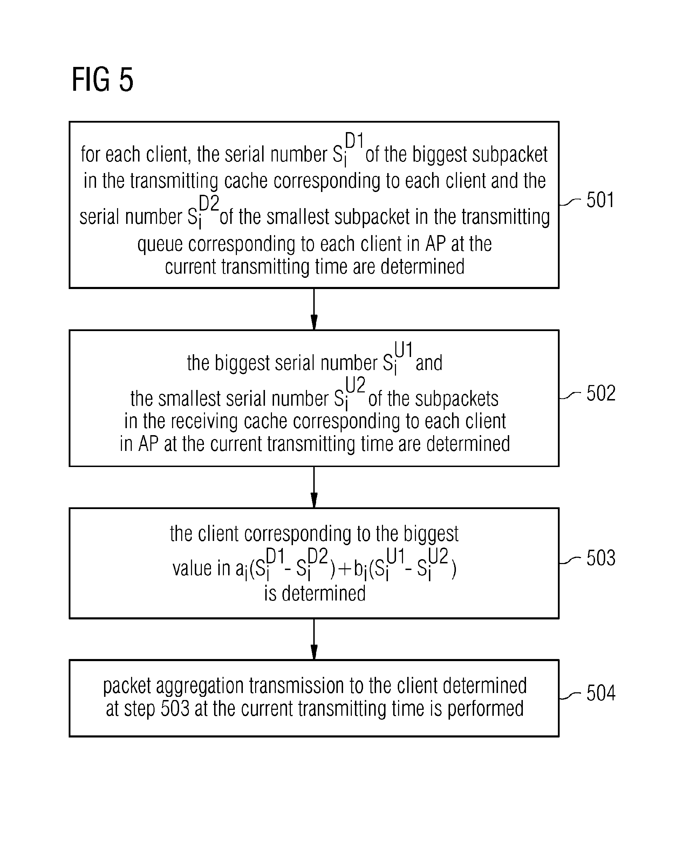

In the PCF mechanism, the upstream and downstream data transmissions are both collectively controlled by the AP, and the AP polls each client according to a preset poll order, and the polled client can perform data transmission when there is data transmission. The difference with the DCF mechanism is that in the PCF mechanism the transmission urgency of each client needs to consider not only downstream data but also upstream data. Assuming there are *N* clients at this AP in the system, then there is a transmitting cache and transmitting queue respectively for the downstream transmission of these *N* clients at the AP side, i.e. there are *N* transmitting caches and *N* transmitting queues, at the same time, there are receiving caches respectively for the upstream transmission of these *N* clients at the AP side, i.e. there are *N* receiving caches. Fig. 5 is a schematic diagram of a method provided by embodiment II, as shown in Fig. 5, and the method particularly comprises the following steps:
Step 501: the biggest serial number of the subpacket *Sᵢ^{D1}* in the transmitting cache corresponding to each client in AP at the current transmitting time and the smallest serial number of the subpacket *Sᵢ^{D2}* in the transmitting queue corresponding to each client are determined for each client, wherein *i* is an identifier of each client, *i*=*1*, *2*, ..., *N*.

Step 502: the biggest serial number *Sᵢ^{U1}* and the smallest serial number *Sᵢ^{U2}* of the subpackets in the receiving cache corresponding to each client in AP at the current transmitting time are determined.

The receiving cache corresponding to each client in AP is used to cache the upstream data sent by this client; likewise, if the transmission fails, then the subpackets before the smallest serial number in the upstream data transmitted in failure are sent to the upper layer, and the remaining subpackets are the subpackets which are held up.

Step 503: the client corresponding to the biggest value of *aᵢ(Sᵢ^{D1}-Sᵢ^{D2}) +bᵢ (Sᵢ^{U1}+Sᵢ^{U2})* is determined.

It can be seen from the description of embodiment I that, the difference value between *Sᵢ^{D1}* and *Sᵢ^{D2}* corresponding to the client reflects the number of downstream subpackets held up by this client, i.e. reflects the urgency of the downstream data transmission of this client.

The hold-up upstream subpackets are in the receiving cache of upstream data, and the difference value between *Sᵢ^{U1}* and *Sᵢ^{U2}* reflects the number of the hold-up upstream subpackets in the receiving cache of the upstream data corresponding to the client with the identifier *i*, i.e. reflects the transmission urgency of the upstream data of this client.

*aᵢ* and *bᵢ* are the weight values of the transmission urgency of the downstream data and the upstream data corresponding to the client with the identifier *i*, and *aᵢ* and *bᵢ* of each client can be the same or different, when the requirements of the transmission urgency of downstream data is high, aᵢ can be set to be relatively high, and when the requirements of the transmission urgency of upstream data is high, *bᵢ* can be set to be relatively high. The value of *aᵢ(Sᵢ^{D1}-Sᵢ^{D2})+bᵢ(Sᵢ^{U1}+Sᵢ^{U2})* as a whole reflects the urgency of upstream and downstream data transmission of the client with the identifier i.

Step 504: a packet aggregation transmission is performed to the client determined at step 503 at the current transmitting time.

In this step, the packet aggregation transmission performed to this determined client comprises that: the AP first performs downstream packet aggregation transmission to this client and performs upstream packet aggregation transmission after the client has fed back Block ACK for this packet aggregation transmission.

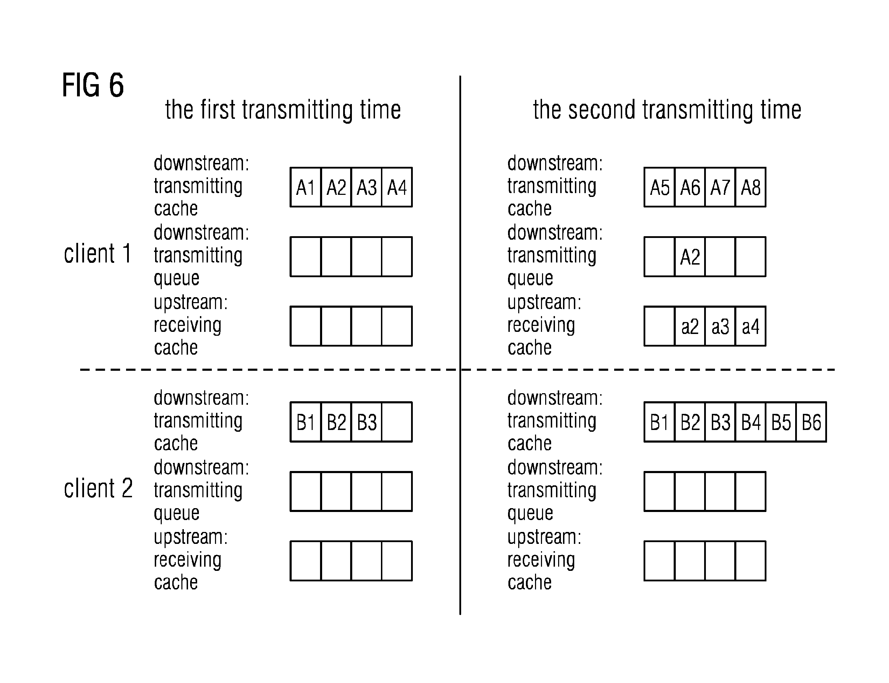

Hereinbelow, the method provided by embodiment II will be described by way of a particular example, and for the sake of simplicity, it is assumed that the AP only corresponds to two clients in the system, as shown in Fig. 6.

First, for client 1 and client 2, the AP respectively determines the biggest serial number of the subpacket *S₁^{D1}* in the transmitting cache corresponding to client 1 in the AP to be 4 at a first transmitting time, the smallest serial number of the subpacket *S₁^{D2}* in the transmitting queue corresponding to client 1 to be 0, the biggest serial number of the subpacket *S₂^{D1}* in the transmitting cache corresponding to client 2 in the AP to be 3, and the smallest serial number of the subpacket *S₂^{D2}* in the transmitting queue corresponding to client 2 to be 0. At the current time, the biggest serial number *S₁^{U1}* and the smallest serial number *S₁^{U2}* of the subpackets in the receiving cache for upstream data corresponding to client 1 are both 0, and the biggest serial number *S₂^{U1}* and the smallest serial number *S₂^{U2}* of the subpackets in the receiving cache for upstream data corresponding to client 2 are both 0.

If the urgency of upstream data transmission and downstream data transmission of client 1 are the same, then both *a₁* and *b₁* are 1, and if the urgency of upstream data transmission and downstream data transmission of client 2 are the same also, then both *a₂* and *b₂* are 1. Then *a₁(S₁^{D1}*-*S₁^{D2})+b₂(S₂*^{U1}*+S₂*^{U}*²)=4* (corresponding to client 1) and *a₂(S₂^{D1}*-*S₂^{D2})+b₂(S₂*^{U1}*+S₂*^{U}*²)=3* (corresponding to client 2), which indicates that the transmission urgency of client is relatively high and performs packet aggregation transmission to client 1 at the current time.

If the downstream subpackets A2 are failed during the packet aggregation transmission and other subpackets are transmitted successfully, then client 1 returns a Block ACK to the AP and performs packet aggregation transmission with ten lines of data, assuming a2 is transmitted in failure, then a2, a3 and a4 are held up in the receiving cache for client 1. The AP releases the successfully transmitted A1, A3 and A4 from the transmitting queue according to the Block ACK returned by client 1 and only holds A2.

By then, at the second transmitting time, for client 1 and client 2, the AP determines respectively the biggest serial number of the subpacket *S₁^{D1}* in the transmitting cache corresponding to client 1 in the AP to be 8 at the first transmitting time, the smallest serial number of the subpacket *S₁^{D2}* in the transmitting queue corresponding to client 1 to be 2, the biggest serial number of the subpacket *S₂^{D1}* in the transmitting cache corresponding to client 2 in the AP to be 6, and the smallest serial number of the subpacket *S₂^{D2}* in the transmitting queue corresponding to client 2 to be 0. At the current time, the biggest serial number *S₁^{U1}* and the smallest serial number *S₁^{U2}* of the subpackets in the receiving cache for upstream data corresponding to client 1 are respectively 4 and 2, and the biggest serial number *S₂^{U1}* and the smallest serial number *S₂^{U2}* of the subpackets in the receiving cache corresponding to client 2 are respectively 0 and 0.

If *a₁(S₁^{D1}-S₁^{D2})+b₂(S₂*^{U}*¹+S₂*^{U}*²)=8* (corresponding to client 1) and *a₂(S₂^{D1}-S₂^{D2})+b₂(S₂^{U1}+S₂^{U2})=6* (corresponding to client 2), it indicates that the transmission urgency of client 1 is relatively high, so it still performs the packet aggregation transmission to client 1 at the second transmitting time.

At the second transmitting time, for client 1 and in the downstream direction, there are five hold-up subpackets A2, A5, A6, A7 and A8 at the AP end, and there are two hold-up subpackets A3 and A4 for client 1, i.e. there are in total seven hold-up subpackets in the downstream direction; and in the upstream direction, there are three hold-up subpackets a2, a3 and a4 at the AP end. For client 2 and in the downstream direction, only at the AP end there are six hold-up subpackets B1, B2, B3, B4, B5 and B6. Therefore, the transmission urgency of client 1 is higher than that of client 2, so it can be seen that the above-mentioned method provided by the present invention and the actual situation are consistent.

Furthermore, in addition to the fact that the method provided by the present invention reflects transmission urgency by employing the difference of the serial number of the subpackets, it can also reflect transmission urgency in combination with other parameters on this basis. For example, when the subpackets are sent into the transmitting cache or receiving cache the transmitting end can print a time stamp value thereon, and in the above-mentioned embodiment I and embodiment II, the serial number is replaced with the time stamp value of each subpacket.

In embodiment I, the last determined client is the client corresponding to the biggest value of *Tᵢ*, wherein *Tᵢ=_{Ti}^{D1}-_{Ti}^{D2}, Tᵢ^{D1}* is the biggest time stamp value of the subpacket in the transmitting cache corresponding to the client with the identifier *i*, and *Tᵢ^{D2}* is the smallest time stamp value of the subpacket in the transmitting queue corresponding to the client with the identifier *i*.

Likewise, in embodiment II, the last determined client is the client corresponding to the biggest value of Tᵢ, now *Tᵢ=aᵢ(Tᵢ^{D1}-Tᵢ^{D2})+bᵢ(Ti*^{U1}*-Ti^{U2})* wherein *Ti^{D1}* is the biggest time stamp value of the subpacket in the transmitting cache corresponding to the client with the identifier *i*, *Tᵢ^{D2}* is the smallest time stamp value of the subpacket in the transmitting queue corresponding to the client with the identifier *i*, *Tᵢ^{U1}* and *Tᵢ^{U2}* are the biggest time stamp value of the subpacket and the smallest time stamp value of the subpacket in the receiving cache corresponding to the client with the identifier I respectively, and *aᵢ* and *bᵢ* are the weight values of the transmission urgency of the downstream data and upstream data corresponding to the client with the identifier *i*.

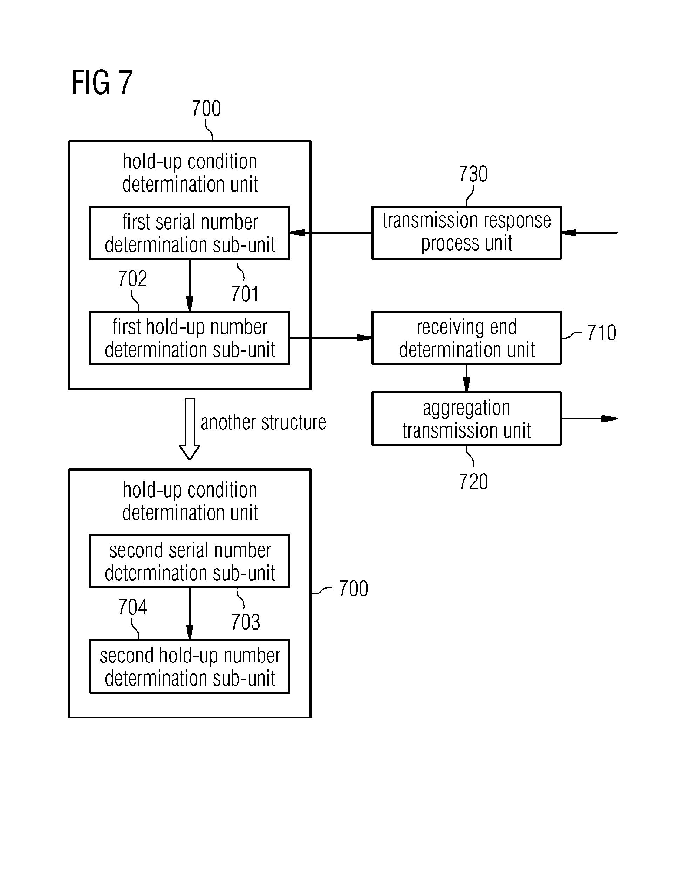

Hereinbelow, an apparatus corresponding to the above-mentioned method is described in detail. Fig. 7 is a schematic diagram of the structure of the apparatus provided by the present invention, which is for application in a system comprising a transmitting end and at least two receiving ends, the apparatus being set at the transmitting end, as shown in Fig. 7, and the apparatus comprising: a hold-up condition determination unit 700, a receiving end determination unit 710 and an aggregation transmission unit 720.

The hold-up condition determination unit 700 determines a hold-up condition of the subpackets at the transmitting end and the receiving end respectively for each receiving end at the current transmitting time.

The receiving end determination unit 710 determines the receiving end corresponding to the worst hold-up condition of the subpackets at the transmitting end and the receiving end.

The aggregation transmission unit 720 performs a packet aggregation transmission for the receiving end determined by said receiving end determination unit at the current transmitting time.

The apparatus comprises the following two situations according to different hold-up conditions:
The first situation:
   The hold-up condition of the subpackets at the above-mentioned transmitting end and receiving end is the sum *Nᵢ* of the number of the subpackets held up at said transmitting end and said receiving end, wherein *i* is an identifier of the receiving end. The receiving end corresponding to the worst hold-up condition of the subpackets at the transmitting end and the receiving end is the receiving end corresponding to the maximum value of *Nᵢ.*

In this situation, when the system uses a DCF mechanism, the hold-up condition determination unit 700 can comprise, in particular, a first serial number determination sub-unit 701 and a first hold-up number determination sub-unit 702.

The first serial number determination sub-unit 701 determines *Sᵢ^{D1}* and *Sᵢ^{D2}* respectively for each receiving end, wherein *Sᵢ^{D1}* is the biggest serial number of the subpacket in the transmitting cache corresponding to the receiving end with the identifier *i* at the transmitting end at the current transmitting time, and *Sᵢ^{D2}* is the smallest serial number of the subpacket in the transmitting queue corresponding to the receiving end with the identifier *i* at the transmitting end at the current transmitting time.

The first hold-up number determination sub-unit 702 determines the number *Nᵢ* of the subpackets held up at the transmitting end and the receiving end according to *Nᵢ=Sᵢ^{D1}*-*S₁^{D2};* and
when the system uses a PCF mechanism, the hold-up condition determination unit can employ another structure, which particularly comprises: a second serial number determination sub-unit 703 and a second hold-up number determination sub-unit 704.

The second serial number determination sub-unit 703 respectively determines *Sᵢ^{D1}, Sᵢ^{D2}, Sᵢ*^{U*1*} and *Sᵢ^{U2}* for each receiving end, wherein *Sᵢ^{D1}* is the biggest serial number of the subpacket in the transmitting cache corresponding to the receiving end with the identifier *i* at the current transmitting time, *Sᵢ^{D2}* is the smallest serial number of the subpacket in the transmitting queue corresponding to the receiving end with the identifier *i* at the current transmitting time, *Sᵢ^{U1}* is the biggest serial number of the subpacket in the receiving cache corresponding to the receiving end with the identifier *i* at the current transmitting time, and *Sᵢ^{U2}* and is the smallest serial number of the subpacket in the receiving cache corresponding to the receiving end with the identifier *i* at the current transmitting time.

The second hold-up number determination sub-unit 704 determines the number *Nᵢ* of the subpackets held up at the transmitting end and the receiving end according to *Nᵢ=aᵢ(Sᵢ^{D1}-Sᵢ^{D2})+bᵢ(Sᵢ*^{U1}*-Sᵢ*^{U}*²),* wherein *aᵢ* is the weight value of the transmission urgency of the downstream data corresponding to the receiving end with the identifier *i*, and *bᵢ* is the weight value of the transmission urgency of the upstream data corresponding to the receiving end with the identifier *i*.

The second situation:
The hold-up condition of the subpackets at the transmitting end and the receiving end is the sum *Tᵢ* of the hold-up time period of the subpackets at the transmitting end and receiving end, wherein *i* is an identifier of the receiving end. The receiving end corresponding to the worst hold-up condition of the subpackets at the transmitting end and the receiving end is the receiving end corresponding to the maximum value of *Tᵢ.*

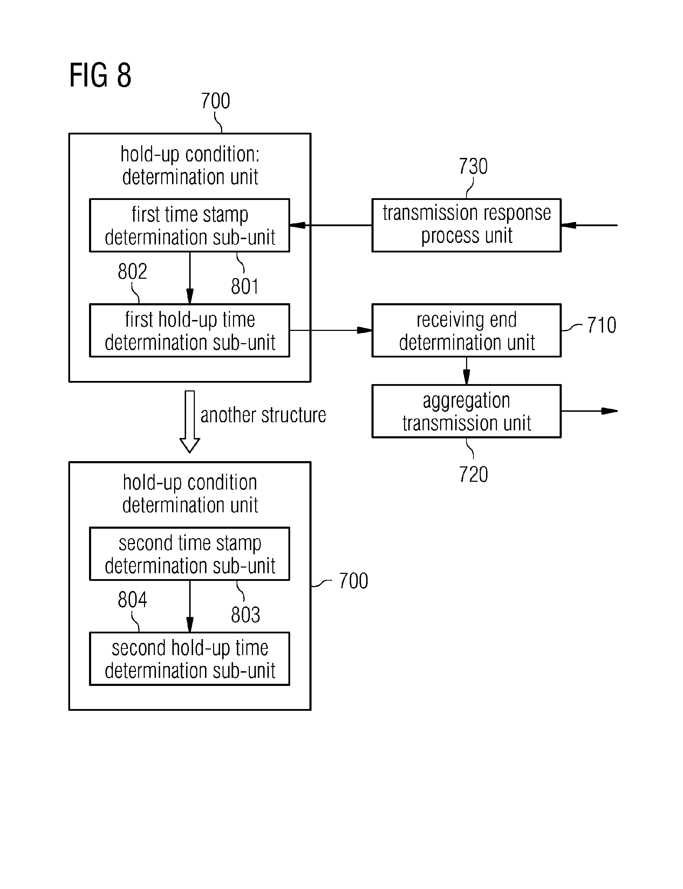

When the system uses a DCF mechanism, as shown in Fig. 8, the hold-up condition determination unit 700 at this moment may comprise, in particular, a fist time stamp determination sub-unit 801 and a first hold-up time period determination sub-unit 802.

The first time stamp determination sub-unit 801 determines *Tᵢ^{D1}* and *Tᵢ^{D2}* respectively for each receiving end, wherein *Tᵢ^{D1}* is the biggest time stamp value of the subpacket in the transmitting cache at the transmitting end corresponding to the receiving end with the identifier *i* at the current transmitting time, and *Tᵢ^{D2}* is the smallest time stamp value of the subpacket in the transmitting queue at the transmitting end corresponding to the receiving end with the identifier *i* at the current transmitting time; and
the hold-up time period determination sub-unit 802 determines the sum *Tᵢ* of the hold-up time period of the subpackets at the transmitting end and the receiving end according to *Tᵢ=Tᵢ^{D1}-Tᵢ^{D2}.*

When the system uses a PCF mechanism, as shown in Fig. 8, the hold-up condition determination unit 700 uses another structure, which comprises particularly a second time stamp value determination sub-unit 803 and a second hold-up number determination sub-unit 804.

The second time stamp determination sub-unit determines *Tᵢ^{D1}, Tᵢ^{D2}, Tᵢ^{U1}* and *Tᵢ^{U2}* respectively for each receiving end, wherein *Tᵢ^{U1}* is the biggest time stamp value of the subpacket in the receiving cache at the transmitting end corresponding to the receiving end with the identifier *i* at the current transmitting time, and *Tᵢ^{U2}* is the smallest time stamp value of the subpacket at the transmitting end in the receiving cache corresponding to the receiving end with the identifier *i* at the current transmitting time.

The second hold-up time period determination sub-unit 804 determines the sum Tᵢ of the hold-up time period of the subpackets at the transmitting end and the receiving end according to *Tᵢ=aᵢ(Tᵢ^{D1}-Tᵢ^{D2})+bᵢ(Tᵢ^{U1}-Ti^{U2}),* wherein *aᵢ* is the weight value of the transmission urgency of the downstream data corresponding to the receiving end with the identifier *i*, and *bᵢ* is the weight value of the transmission urgency of the upstream data corresponding to the receiving end with the identifier i.

Furthermore, in the structure shown in Figs. 7 and 8, the apparatus may further comprises: a transmission response processing unit 730, which can delete the successfully transmitted subpackets from the transmitting queue at the transmitting end corresponding to the determined receiving end according to a returned response from the receiving end regarding the packet aggregation transmission. Then, the hold-up condition determination unit 700 determines respectively for each receiving end the hold-up condition of the subpackets at the transmitting end and the receiving end at the next transmitting time.

The above is the technical solution provided for the point-to-multipoint transmission scenario, and hereinbelow, the technical solution solving hold-up effect is described. The main method provided for this problem is as follows: after having deleted the successfully transmitted subpackets from the transmitting queue according to a returned response from the receiving end regarding the packet aggregation transmission, the transmitting end duplicates *N* copies of the subpackets to be retransmitted in the transmitting queue and performs a packet aggregation transmission to the *N* subpackets together with the subpackets sent into the transmitting queue from the transmitting cache; wherein *N* is an integer greater than 1.

Hereinbelow, the method is described in conjunction with particular embodiments in detail.

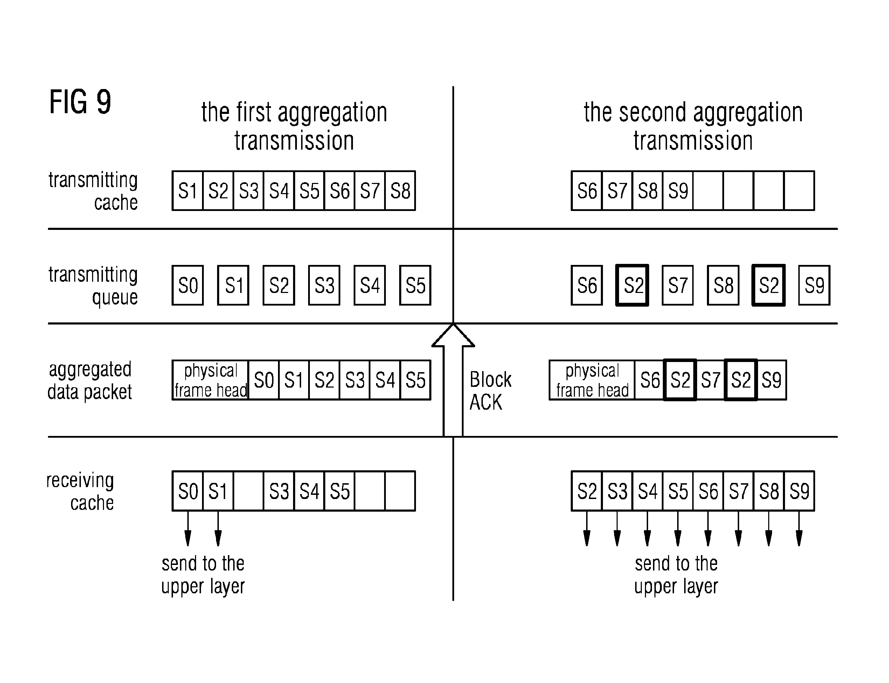

In embodiment III, as shown in Fig. 9, it is assumed that during the first packet aggregation transmission, S0, S1, S2, S3, S4 and S5 are included in the transmitting queue; after the first packet aggregation transmission, S2 fails in transmission, and the receiving end returns a Block Ack to report the transmission condition. In addition, the subpackets S0 and S1 before the subpacket S2 failed in transmission are sent to the upper layer, while S3, S4 and S5 are held up in the receiving cache of the receiving end.

After having received the Block Ack, the transmitting end deletes the successfully transmitted subpackets S0, S1 S3, S4 and S5 from the transmitting queue, duplicates *N* copies of the subpacket S2 which needs to be retransmitted, taking duplicating 2 copies as an example in Fig. 9, and then performs packet aggregation transmission in combination with other subpackets S6, S7, S8 and S9 sent into the transmitting queue by the transmitting cache.

In the present invention, the strategy of duplicating subpackets can have a variety of settings: in addition to setting *N* to a fixed value, the value of *N* can also be set flexibly according to the number of times of retransmission, for example, set *N*=f(M), wherein f is a function with the value of M being a variant, in which M is the number of times of the retransmission of this subpacket. For example, it can be set f(M)=M+1, i.e. *N*=M+1; when performing the first retransmission, this subpacket is duplicated to 2 copies, and when performing the second retransmission, this subpacket is duplicated to 3 copies, etc.

The value of *N* can also be determined according to the level of instantaneity required by the receiving end, for example, when the requirement to instantaneity by the receiving end is relatively high, for example, what the receiving end receive are online video data, then the value of *N* can be set bigger; and when the requirement to instantaneity by the receiving end is not high, for example, what the receiving end receive are download service data, then the value of N can be set smaller. Certainly, other strategies can also be employed, which will be not be described redundantly here.

In addition to placing the duplicated *N* subpackets at the position set in the aggregated packet, more preferably, in order to improve the successful transmission rate of the retransmitted data packets, the duplicated *N* subpackets can be placed in the aggregated packet randomly or pseudo-randomly, thus reducing the transmission failure resulting from channel burst noise, etc. As shown in Fig. 9, the duplicated 2 subpackets S2 are placed at the position calculated pseudo-randomly.

In this way, the probability of the receiving end successfully receiving the retransmitted subpackets is improved, so that the subpackets held up in the receiving cache can be sent to the upper layer as quickly as possible, thereby improving the system instantaneity.

This method of solving hold-up effect can be applied in the above-mentioned point-to-multipoint packet aggregation transmission provided by the present invention in addition to being applied in the scenario of point-to-point transmission, i.e. after having determined a receiving end at the current transmitting time, the manner of duplicating *N* copies of the retransmitted subpackets can be employed during the packet aggregation transmission for this receiving end to reduce hold-up effect of the receiving end.

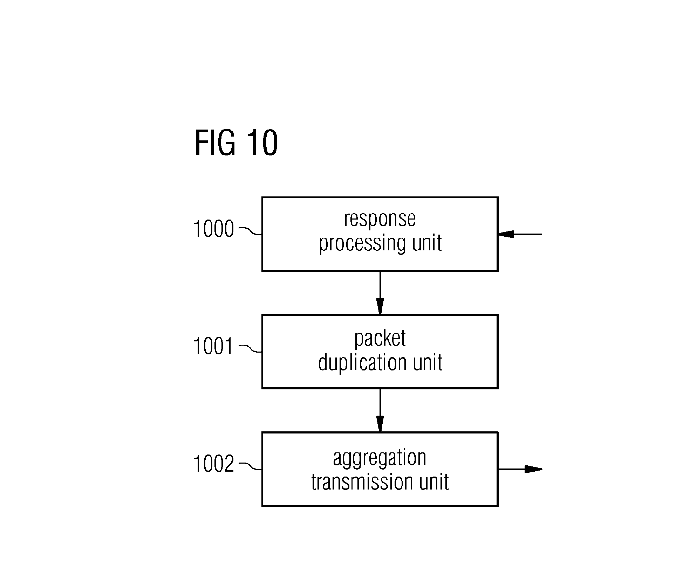

Fig. 10 is a structure diagram of the apparatus for the method provided by embodiment III, and as shown in Fig. 10, this apparatus may comprise: a response processing unit 1000, a packet duplication unit 1001 and an aggregation transmission unit 1002.

The response processing unit 1000 is used for deleting the successfully transmitted subpackets from the transmitting queue according to a returned response from the receiving end regarding the packet aggregation transmission and sending a process notification to the packet duplication unit 1001.

The packet duplication unit 1001 is used for duplicating *N* copies of the subpackets to be retransmitted in the transmitting queue after having received said process notification.

The aggregation transmission unit 1002 is used for performing a packet aggregation transmission to the duplicated *N* subpackets together with the subpackets sent into the transmitting queue from the transmitting cache. Here, *N* is an integer greater than 1.

In particular, the above-mentioned *N* can be a preset value; or *N* is a value related to the retransmission times for the subpackets to be retransmitted; or *N* is a value related to the instantaneity requirement at the receiving end.

In addition, the aggregation transmission unit 1002 can place these *N* subpackets at a position set in the aggregated packet or at a position calculated randomly or pseudo-randomly in the aggregated packet during the process of performing said packet aggregation transmission.

It can be seen from the above technical solutions that the present invention provides a particular method for packet aggregation transmission for the point-to-multipoint transmission scenario, determines for each receiving end the hold-up condition of the subpackets at the transmitting end and receiving end, determines the receiving end corresponding to the worst hold-up condition of the subpackets at the transmitting end and the receiving end, and performs a preferential packet aggregation transmission to this receiving end at the current transmitting time. By solving the problem of transmission time sequence for a plurality of receiving ends in this way, it improves the system instantaneity to the maximum degree.

The present invention also improves the probability of the receiving end successfully receiving the retransmitted subpackets by duplicating *N* copies of the retransmitted subpackets together with performing packet aggregation transmission to the subpackets sent into the transmitting queue from the transmitting cache, enabling the subpackets held up in the receiving cache be sent to the upper layer as quickly as possible, thus improving the system's instantaneity.

What are described above are merely preferred embodiments of the present invention and are not intended to limit the present invention, and any modification, equivalents, improvements made in the spirit and principle of the present invention shall be included in the protective scope of the present invention.

## Claims

1. A method for packet aggregation transmission, which is for application in a system comprising a transmitting end and at least two receiving ends, **characterized in that** the method comprises:
A. determining for each receiving end respectively a hold-up condition of subpackets at the transmitting end and the receiving end at the current transmitting time; and
B. determining the receiving end corresponding to the worst hold-up condition of the subpackets at the transmitting end and the receiving end, and performing a packet aggregation transmission to the determined receiving end at the current transmitting time.

2. The method according to claim 1, **characterized in that** said hold-up condition of the subpackets at the transmitting end and the receiving end is the sum Nᵢ of the number of the subpackets held up at said transmitting end and said receiving end, wherein *i* is an identifier of the receiving end; and
said receiving end corresponding to the worst hold-up condition of the subpackets at the transmitting end and the receiving end is the receiving end corresponding to the maximum value of *Nᵢ.*

3. The method according to claim 2, **characterized in that** when said system uses a mechanism of distributed coordination function DCF, said *Nᵢ* is *Nᵢ=Sᵢ^{D1}-Sᵢ^{D2},* wherein *Sᵢ^{D1}* is the biggest serial number of the subpacket in the transmitting cache at the transmitting end corresponding to the receiving end with the identifier *i* at the current transmitting time, and *Sᵢ^{D2}* is the smallest serial number of the subpacket in the transmitting queue at the transmitting end corresponding to the receiving end with the identifier *i* at the current transmitting time; and
when said system uses a mechanism of point coordination function PCF, the value of said *Nᵢ* is *Nᵢ=aᵢ(Sᵢ^{D1}*-*Sᵢ^{D2})+bᵢ(Sᵢ^{U1}+Sᵢ^{U2}),* wherein *Sᵢ^{U1}* is the biggest serial number of the subpacket in the receiving cache at the transmitting end corresponding to the receiving end with the identifier *i* at the current transmitting time, *Sᵢ^{U2}* is the smallest serial number of the subpacket in the receiving cache at the transmitting end corresponding to the receiving end with the identifier *i* at the current transmitting time, *aᵢ* is the weight value of the transmission urgency of the downstream data corresponding to the receiving end with the identifier *i*, and *bᵢ* is the weight value of the transmission urgency of the upstream data corresponding to the receiving end with the identifier i.

4. The method according to claim 1, **characterized in that** said hold-up condition of the subpackets at the transmitting end and the receiving end is the sum *Tᵢ* of the hold-up time period of the subpackets at said transmitting end and said receiving end, wherein *i* is an identifier of the receiving end; and
said receiving end corresponding to the worst hold-up condition of the subpackets at the transmitting end and the receiving end is the receiving end corresponding to the maximum value of *Tᵢ.*

5. The method according to claim 4, **characterized in that** when said system uses a mechanism of distributed coordination function DCF, said *Tᵢ* is *Tᵢ=Tᵢ^{D1}-Tᵢ^{D2},* wherein *Tᵢ^{D1}* is the biggest time stamp value of the subpacket in the transmitting cache at the transmitting end corresponding to the receiving end with the identifier *i* at the current transmitting time, and *Tᵢ^{D2}* is the smallest time stamp value of the subpacket in the transmitting queue at the transmitting end corresponding to the receiving end with the identifier *i* at the current transmitting time; and
when said system uses a mechanism of point coordination function PCF, the value of said *Tᵢ* is: *Tᵢ=aᵢ(Tᵢ^{D1}*-*Tᵢ^{D2})+bᵢ(Tᵢ^{U1}+Tᵢ^{U2}),* wherein *Tᵢ^{U1}* is the biggest time stamp value of the subpacket in the receiving cache at the transmitting end corresponding to the receiving end with the identifier *i* at the current transmitting time, *Tᵢ^{U2}* is the smallest time stamp value of the subpacket in the receiving cache at the transmitting end corresponding to the receiving end with the identifier *i* at the current transmitting time, *aᵢ* is the weight value of the transmission urgency of the downstream data corresponding to the receiving end with the identifier *i*, and *bᵢ* is the weight value of the transmission urgency of the upstream data corresponding to the receiving end with the identifier *i*.

6. The method according to any of claims 1 to 5, **characterized in that** after said step B, it further comprises: deleting by said transmitting end the successfully transmitted subpackets from the transmitting queue at the transmitting end corresponding to said determined receiving end according to a returned response from the receiving end regarding said packet aggregation transmission, and going to step A at the next transmitting time.

7. An apparatus for packet aggregation transmission, which is for application in a system comprising a transmitting end and at least two receiving ends, **characterized in that** the apparatus is set at said transmitting end, and the apparatus comprises a hold-up condition determination unit, a receiving end determination unit and an aggregation transmission unit;
wherein, said hold-up condition determination unit is used for determining for each receiving end respectively a hold-up condition of subpackets at the transmitting end and the receiving end at the current transmitting time;
said receiving end determination unit is used for determining the receiving end corresponding to the worst hold-up condition of the subpackets at the transmitting end and the receiving end; and
said aggregation transmission unit is used for performing a packet aggregation transmission to the receiving end determined by said receiving end determination unit at the current transmitting time.

8. The apparatus according to claim 7, **characterized in that** said hold-up condition of the subpackets at the transmitting end and the receiving end is the sum *Nᵢ* of the number of the subpackets held up at said transmitting end and said receiving end, wherein *i* is an identifier of the receiving end; and
said receiving end corresponding to the worst hold-up condition of the subpackets at the transmitting end and the receiving end is the receiving end corresponding to the maximum value of *Nᵢ.*

9. The apparatus according to claim 8, **characterized in that** when said system uses a DCF mechanism, said hold-up condition determination unit comprises:
a first serial number determination sub-unit for determining *Sᵢ^{D1}* and *Sᵢ^{D2}* respectively for each receiving end, wherein *Sᵢ^{D1}* is the biggest serial number of the subpacket in the transmitting cache at the transmitting end corresponding to the receiving end with the identifier *i* at the current transmitting time, and *Sᵢ^{D2}* is the smallest serial number of the subpacket in the transmitting queue at the transmitting end corresponding to the receiving end with the identifier *i* at the current transmitting time; and
a first hold-up number determination sub-unit for determining said number *Nᵢ* of the subpackets held up at the transmitting end and the receiving end according to *Nᵢ=Sᵢ^{D1}-Sᵢ^{D2};* and
when said system uses a PCF mechanism, said hold-up condition determination unit comprises:
a second serial number determination sub-unit for determining *Sᵢ^{D1}, Sᵢ^{D2}, Sᵢ^{U1}* and *Sᵢ^{U2}* respectively for each receiving end, wherein *Sᵢ^{U1}* is the biggest serial number of the subpacket in the receiving cache at the transmitting end corresponding to the receiving end with the identifier *i* at the current transmitting time, and *Sᵢ^{U2}* is the smallest serial number of the subpacket in the receiving cache at the transmitting end corresponding to the receiving end with the identifier *i* at the current transmitting time; and
a second hold-up number determination sub-unit for determining said number Nᵢ of the subpackets held up at the transmitting end and the receiving end according to *Nᵢ=aᵢ(Sᵢ^{D1}*-*Sᵢ^{D2})+bᵢ(Sᵢ^{U1}-Sᵢ^{U2}),* wherein *aᵢ* is the weight value of the transmission urgency of the downstream data corresponding to the receiving end with the identifier *i*, and *bᵢ* is the weight value of the transmission urgency of the upstream data corresponding to the receiving end with the identifier i.

10. The apparatus according to claim 7, **characterized in that** said hold-up condition of the subpackets at the transmitting end and the receiving end is the sum *Tᵢ* of the hold-up time period of the subpackets at said transmitting end and said receiving end, wherein *i* is an identifier of the receiving end; and
said receiving end corresponding to the worst hold-up condition of the subpackets at the transmitting end and the receiving end is the receiving end corresponding to the maximum value of *Tᵢ.*

11. The apparatus according to claim 10, **characterized in that** when said system uses a DCF mechanism, said hold-up condition determination unit comprises:
a first time stamp determination sub-unit for determining *Tᵢ^{D1}* and *Tᵢ^{D2}* respectively for each receiving end, wherein *Tᵢ^{D1}* is the biggest time stamp value of the subpacket in the transmitting cache at the transmitting end corresponding to the receiving end with the identifier *i* at the current transmitting time, and *Tᵢ^{D2}* is the smallest time stamp value of the subpacket in the transmitting queue at the transmitting end corresponding to the receiving end with the identifier *i* at the current transmitting time; and
a first hold-up time period determination sub-unit for determining said sum *Tᵢ* of the hold-up time period of the subpackets at the transmitting end and the receiving end according to *Tᵢ=_{Ti}^{D1}-_{Ti}^{D2};* and
when said system uses a PCF mechanism, said hold-up condition determination unit comprises:
a second time stamp determination sub-unit for determining *Tᵢ^{D1}, Tᵢ^{D2}, Tᵢ^{U1}* and *Tᵢ^{U2}* respectively for each receiving end, wherein *Tᵢ^{U1}* is the biggest time stamp value of the subpacket in the receiving cache at the transmitting end corresponding to the receiving end with the identifier *i* at the current transmitting time, and *Tᵢ^{U2}* is the smallest time stamp value of the subpacket in the receiving cache at the transmitting end corresponding to the receiving end with the identifier *i* at the current transmitting time; and
a second hold-up time period determination sub-unit for determining said sum *Tᵢ* of the hold-up time period of the subpackets at the transmitting end and the receiving end according to *Tᵢ=aᵢ(Tᵢ^{D1}-Ti^{D2})+bᵢ(Ti^{U1}-Ti^{U2}),* wherein *aᵢ* is the weight value of the transmission urgency of the downstream data corresponding to the receiving end with the identifier *i*, and *bᵢ* is the weight value of the transmission urgency of the upstream data corresponding to the receiving end with the identifier *i*.

12. The apparatus according to any of claims 7 to 11, **characterized in that** the apparatus further comprises: a transmission response processing unit for deleting the successfully transmitted subpackets from the transmitting queue at the transmitting end corresponding to said determined receiving end according to a returned response from the receiving end regarding said packet aggregation transmission.

13. A method for packet aggregation transmission, **characterized in that** the method comprises: after having deleted the successfully transmitted subpackets from a transmitting queue according to a returned response from a receiving end regarding a packet aggregation transmission, duplicating by a transmitting end *N* copies of the subpackets to be retransmitted in the transmitting queue, and performing a packet aggregation transmission to the *N* subpackets together with the subpackets sent into the transmitting queue from a transmitting cache; wherein, *N* is an integer greater than 1.

14. The method according to claim 13, **characterized in that** said *N* is a preset value; or
said *N* is a value related to the retransmission times for said subpackets to be retransmitted; or
said *N* is a value related to the instantaneity requirement at said receiving end.

15. The method according to claim 13 or 14, wherein during the packet aggregation transmission said *N* subpackets are placed at a position set in an aggregated packet or placed at a position calculated randomly or pseudo-randomly in the aggregated packet.

16. An apparatus for packet aggregation transmission, said apparatus being set at a transmitting end, **characterized in that** the apparatus comprises a response processing unit, a packet duplication unit and an aggregation transmission unit;
wherein said response processing unit is used for deleting the successfully transmitted subpackets from a transmitting queue according to a returned response from a receiving end regarding a packet aggregation transmission and sending a process notification to said packet duplication unit;
said packet duplication unit is used for duplicating *N* copies of the subpackets to be retransmitted in the transmitting queue after having received said process notification; and
said aggregation transmission unit is used for performing a packet aggregation transmission of the duplicated *N* subpackets together with the subpackets sent into the transmitting queue from a transmitting cache;
wherein, *N* is an integer greater than 1.

17. The apparatus according to claim 16, **characterized in that** said *N* is a preset value; or
said *N* is a value related to the retransmission times for said subpackets to be retransmitted; or
said *N* is a value related to the instantaneity requirement at said receiving end.

18. The apparatus according to claim 16 or 17, **characterized in that**, during said packet aggregation transmission, said aggregation transmission unit places said *N* subpackets at a position set in an aggregated packet or at a position calculated randomly or pseudo-randomly in the aggregated packet.
